# EUROPEAN PATENT APPLICATION

(11) **EP 4 597 633 A1**
(43) Date of publication of application: **06.08.2025**
(21) Application number: 23871399.4
(22) Date of filing: 21.07.2023
(51) Int. Cl.: H01M 4/62, C08L 27/16, H01M 4/13, H01M 4/131, H01M 4/505, H01M 4/525

(54) **POSITIVE ELECTRODE FOR NON-AQUEOUS ELECTROLYTE SECONDARY BATTERY, AND NON-AQUEOUS ELECTROLYTE SECONDARY BATTERY**

(30) Priority: 29.09.2022 JP 2022156848
(71) Applicant: Panasonic Energy Co., Ltd., Osaka 570-8511 (JP)
(72) Inventor: HARADA, Tomohiro, Kadoma-shi, Osaka 571-0057 (JP)
(74) Representative: Novagraaf International SA
(86) International application number: PCT/JP2023/026791
(87) International publication number: WO 2024/070156

(57) **Abstract**

A positive electrode for a nonaqueous electrolyte secondary battery includes a positive electrode mixture containing a positive electrode active material, and a binder having a polymer structure derived from vinylidene fluoride. An ATR-IR spectrum of the positive electrode mixture has an α peak belonging to an α-type crystal in the polymer structure in a wavelength region of 760 to 764 cm⁻¹, and a β peak belonging to a β-type crystal in the polymer structure in a wavelength region of 838 to 842 cm⁻¹. A maximum absorption intensity H(α) of the α peak and a maximum absorption intensity H(β) of the β peak satisfy 0.2 ≤ H(α)/H(β) ≤ 5. With this configuration, in the case of using a ferroelectric, it is possible to improve the capacity retention rate while maintaining the capacity of the nonaqueous electrolyte secondary battery.

## Description

### [Technical Field]

The present invention relates to a positive electrode for a nonaqueous electrolyte secondary battery, and a nonaqueous electrolyte secondary battery.

### [Background Art]

Nonaqueous electrolyte secondary batteries represented by lithium-ion secondary batteries are used as power sources for electronic devices such as mobile terminals, driving power sources for vehicles such as electric cars, and the like. The positive electrode includes a positive electrode mixture including a positive electrode active material and a binder.

Patent Literature 1 proposes "a positive electrode for a nonaqueous electrolyte secondary battery, comprising a positive electrode current collector sheet, and a positive electrode mixture layer supported on the positive electrode current collector sheet, wherein the positive electrode mixture layer contains a positive electrode active material, a binder, and a conductive agent, the positive electrode active material has a layered rock-salt type crystal structure, and includes a composite oxide containing lithium and an element A other than lithium, the element A includes at least nickel, an atomic ratio Ni/A of the nickel to the element A is 0.8 or more and 1.0 or less, the binder includes a polymer binder having a three-dimensional network structure, and a mass of the positive electrode mixture layer supported per 1 m2 of the positive electrode current collector sheet is 280 g or more."

Patent Literature 2 proposes "a lithium-ion secondary battery, comprising: an electrode mixture layer containing an electrode active material, and an organic ferroelectric having a relative dielectric constant of 25 or more; and an electrolyte solution containing lithium-bis(fluorosulfonyl)imide, and a nonaqueous solvent, wherein a content of the organic ferroelectric is 0.5 parts by mass or more and 10 parts by mass or less relative to 100 parts by mass of the electrode active material, and in the nonaqueous solvent, a proportion of a highly polar solvent having a relative dielectric constant of 10 or more is 10 vol% or less."

Patent Literature 3 proposes "a lithium-ion secondary battery, comprising a positive electrode having a positive electrode active material, a negative electrode having a negative electrode active material, and a nonaqueous electrolyte, wherein at least one of the positive electrode active material and the negative electrode active material includes a ferroelectric ceramic having a Curie temperature equal to or lower than the operating environment temperature. "

### [Citation List]

### [Patent Literature]

Patent Literature 1: International Publication WO2022/070891
Patent Literature 2: Japanese Laid-Open Patent Publication No. 2016-164832
Patent Literature 3: International Publication WO2018/168241

### [Summary of Invention]

### [Technical Problem]

Patent Literatures 2 and 3 propose including a ferroelectric in the battery, thereby to improve the input-output characteristics. It has been considered that, for example, by sintering an inorganic ferroelectric on the surface of the positive electrode active material, the ionization of Li salt is facilitated at the interface between the positive electrode active material and the electrolyte solution, leading to improved output characteristics of the battery. However, by including a ferroelectric in the positive electrode, the electron conductivity in the positive electrode mixture may be reduced. In this case, the capacity retention rate is lowered. Moreover, ferroelectrics make no contribution to the battery capacity. When a ferroelectric is included in the battery, the battery capacity decreases by that amount.

### [Solution to Problem]

One aspect of the present invention relates to a positive electrode for a nonaqueous electrolyte secondary battery, including: a positive electrode mixture containing a positive electrode active material, and a binder having a polymer structure derived from vinylidene fluoride, wherein an ATR-IR spectrum of the positive electrode mixture has an α peak belonging to an α-type crystal in the polymer structure in a wavelength region of 760 to 764 cm⁻¹, and a β peak belonging to a β-type crystal in the polymer structure in a wavelength region of 838 to 842 cm⁻¹, and a maximum absorption intensity H(α) of the α peak and a maximum absorption intensity H(β) of the β peak satisfy 0.2 ≤ H(α)/H(β) ≤ 5.

Another aspect of the present invention relates to a nonaqueous electrolyte secondary battery, including the above-described positive electrode for a nonaqueous electrolyte secondary battery, a negative electrode, and a nonaqueous electrolyte.

### [Advantageous Effects of Invention]

According to the present disclosure, in the case of utilizing a ferroelectric, it is possible to improve the capacity retention rate of a nonaqueous electrolyte secondary battery while maintaining the capacity thereof.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawing]

[Figure] A longitudinal sectional view of a nonaqueous electrolyte secondary battery according to one embodiment of the present invention.

### [Description of Embodiments]

Embodiments of the present disclosure will be described below by way of examples, but the present disclosure is not limited to the examples described below. In the following description, specific numerical values and materials are exemplified in some cases, but other numerical values and other materials may be adopted as long as the effects of the present disclosure can be obtained. In the present specification, when referring to "a range of a numerical value A to a numerical value B," the range includes the numerical value A and the numerical value B. For example, the phrase "A to B mol%" is equivalent to "A mol% or more and B mol% or less." In the following description, when the lower and upper limits of numerical values related to specific physical properties, conditions, etc. are mentioned as examples, any one of the mentioned lower limits and any one of the mentioned upper limits can be combined in any combination as long as the lower limit is not equal to or more than the upper limit. When a plurality of materials are mentioned as examples, one kind of them may be selected and used singly, or two or more kinds of them may be used in combination.

The present disclosure encompasses a combination of matters recited in any two or more claims selected from plural claims in the appended claims. In other words, as long as no technical contradiction arises, matters recited in any two or more claims selected from plural claims in the appended claims can be combined.

Nonaqueous electrolyte secondary batteries include lithium-ion secondary batteries in which a material that reversibly absorbs and releases lithium ions is used as a negative electrode active material, lithium secondary batteries in which lithium metal deposits on the negative electrode during charging and the lithium metal dissolves during discharging, all-solid-state batteries, and the like.

The nonaqueous electrolyte secondary battery according to the present disclosure includes a positive electrode, a negative electrode, and a nonaqueous electrolyte. A separator is usually disposed between the positive electrode and the negative electrode. The nonaqueous electrolyte usually has lithium ion conductivity.

### [Positive electrode]

The positive electrode for a nonaqueous electrolyte secondary battery according to one embodiment of the present invention includes, for example, a positive electrode current collector sheet, and a positive electrode mixture layer supported on the positive electrode current collector sheet. The positive electrode mixture layer is constituted of a positive electrode mixture containing a positive electrode active material and a binder having a polymer structure derived from vinylidene fluoride (VDF) (hereinafter sometimes referred to as a "PVDF structure"). The positive electrode mixture may further contain a conductive agent. The polymer structure, although referring to a repeating structure of one kind or two or more kinds of monomer units, herein refers to a repeating structure of a vinylidene fluoride unit.

An ATR-IR spectrum of the positive electrode mixture (a spectrum obtained by infrared spectroscopy (IR) using an attenuated-total-reflection method) includes a spectrum specific to the binder. The ATR-IR spectrum refers to a spectrum obtained by infrared spectroscopy (IR) using an attenuated-total-reflection method. As the ATR-IR spectrum specific to the binder, an α peak belonging to an α-type crystal in the PVDF structure is observed in the wavelength region of 760 to 764 cm⁻¹, and a β peak belonging to a β-type crystal in the PVDF structure is observed in the wavelength region of 838 to 842 cm⁻¹. The β-type crystal acts as a ferroelectric. When the binder contains a β-type crystal, the ionization of the salt in the nonaqueous electrolyte is facilitated in the vicinity of the positive electrode active material, to lower the activation energy of the Faradaic reaction. As a result, the internal resistance of the positive electrode is reduced, and the reaction efficiency is enhanced. These phenomena are reflected in the improvement of the capacity retention rate. In the case of utilizing part of the binder as a ferroelectric, unlike the case of using another ferroelectric, the capacity (initial capacity) of the nonaqueous electrolyte secondary battery can be maintained.

An example of preferred measurement conditions for the ATR-IR spectrum is shown below.
Measuring apparatus: Fourier transform infrared spectrometer (FT-IR), ALPHA (available from Bruker Corporation)
Measuring method: ATR method (Di)
Measurement wavenumber region: 4000 cm⁻¹ to 400 cm⁻¹
Resolution: 4 cm⁻¹

The measurement sample may be a powder of the positive electrode mixture obtained by peeling off the positive electrode mixture layer from the positive electrode. In such a powder, the binder is attached to the surfaces of the positive electrode active material particles. The measurement sample may be prepared by placing the powder on a crystal and pressing it with a jig.

Note that it is necessary that a ratio H(α)/H(β) between a maximum absorption intensity H(α) of the α peak and a maximum absorption intensity H(β) of the β peak satisfy 0.2 ≤ H(α)/H(β) ≤ 5. When the H(α)/H(β) ratio exceeds 5, the β-type crystal which is a ferroelectric is not sufficiently formed, failing to exert the above-mentioned effects. On the other hand, when the H(α)/H(β) ratio is less than 0.2, the binding capability of the binder is lowered, and the electron conduction paths in the positive electrode mixture are apt to deteriorate, causing lowering of the capacity retention rate due to the decrease in electron conductivity. The H(α)/H(β) may satisfy 0.2 ≤ H(α)/H(β) ≤ 3, and may be 0.2 ≤ H(α)/H(β) ≤ 2.

The binder having a PVDF structure may be a mixture of a plural kinds of polymers. The binder having a PVDF structure may include a first polymer having a copolymer structure of a vinylidene fluoride (VDF) unit and a trifluoroethylene (TrFE) unit (hereinafter sometimes referred to as a "VDF-TrFE copolymer structure"), and a second polymer different from the first polymer. The first polymer is likely to form a β-type crystal, which is a ferroelectric. It suffices when the first polymer includes a VDF-TrFE copolymer structure as a major component. The VDF-TrFE copolymer structure may be a block copolymer structure, and may be a random copolymer structure. When it is a random copolymer structure in particular, the influence of the polarity of TrFE on the orientation of VDF is greater, and the dielectric constant of the copolymer structure tends to increase.

Note that the "unit" refers to a minimum structure derived from a monomer before polymerization. For example, a vinylidene fluoride unit means a divalent group represented by -(CF₂CH₂)-, which is a minimum structure derived from vinylidene fluoride (CF₂=H₂).

The major component refers to a component the content of which is 50 mol% or more in the total monomer units constituting the polymer. The content of the major component may be 70 mol% or more in the total monomer units, and may be 80 mol% or more in the total monomer units.

The first polymer may be constituted only of a vinylidene fluoride unit and a trifluoroethylene unit, and may further contain a monomer unit other than vinylidene fluoride and trifluoroethylene (hereinafter sometimes referred to as a "third monomer unit"). Although it suffices when the first polymer contains a VDF-TrFE copolymer structure as a major component, it is desirable that 90 mol% or more of the total monomer units contained in the first polymer are constituted of a vinylidene fluoride unit and a trifluoroethylene unit.

A ratio (mVDF/mTrFE ratio) between the number of moles mVDF of the vinylidene fluoride unit and the number of moles mTrFE of the trifluoroethylene unit contained in the first polymer is, for example, 50/50 to 90/10, and may be 60/40 to 80/20. In this case, the H(α)/H(β) ratio can be easily controlled to satisfy 0.2 ≤ H(α)/H(β)≤ 5, and can also be easily controlled to satisfy 0.2 ≤ H(α)/H(β)≤ 3, or 0.2 ≤ H(α)/H(β)≤ 2. The mVDF/mTrFE ratio can be estimated from the aforementioned ATR-IR spectrum.

The second polymer may be at least one selected from the group consisting of a polyvinylidene fluoride (PVDF), a modified polyvinylidene fluoride (modified PVDF), a vinylidene fluoride-based copolymer, and a modified vinylidene fluoride-based copolymer. The second polymer is excellent in binding capability. By using the first polymer and the second polymer in a well-balanced combination, the aforementioned influence by the ferroelectric can be sufficiently exhibited, and the electron conduction paths in the positive electrode mixture are less likely to deteriorate, leading to improved capacity retention rate.

The polyvinylidene fluoride may be composed only of a vinylidene fluoride unit. It is desirable that 50 mol% or more, further 90 mol% or more, or 98 mol% or more of the total monomer units contained in the polyvinylidene fluoride are constituted of vinylidene fluoride units.

The modified polyvinylidene fluoride refers to a polymer in which the fluorine or hydrogen atom of the vinylidene fluoride unit constituting the polyvinylidene fluoride is replaced with another substituent. The content of the modified vinylidene fluoride unit may be, for example, 10 mol% or less of the total monomer units. In other words, it is desirable that 50 mol% or more, and further 90 mol% or more of the total monomer units contained in the modified polyvinylidene fluoride are constituted of vinylidene fluoride units. Examples of another substituent include methacrylic acid, maleic acid, acrylic acid, fumaric acid, and itaconic acid. The modified polyvinylidene fluoride may be composed only of a modified vinylidene fluoride unit, or the modified vinylidene fluoride unit may constitute 50 mol% or more.

The vinylidene fluoride-based copolymer refers to a copolymer containing a vinylidene fluoride unit as a major component, and further containing a monomer unit other than vinylidene fluoride and trifluoroethylene (hereinafter sometimes referred to as a "fourth monomer unit"). In the vinylidene fluoride-based copolymer, likewise in the modified polyvinylidene fluoride, 10 mol% or less of the monomer units may be replaced with another substituent, such as fluorine atom or hydrogen atom. It is desirable that 50 mol% or more of the total monomer units contained in the vinylidene fluoride-based copolymer are constituted of a vinylidene fluoride unit.

The modified vinylidene fluoride-based copolymer refers to a copolymer containing a modified vinylidene fluoride unit as a major component, and further containing a fourth monomer unit. It is desirable that 50 mol% or more of the total monomer units contained in the modified vinylidene fluoride-based copolymer are constituted of a modified vinylidene fluoride unit.

Each of the third and fourth monomer units may be a vinyl monomer, such as hexafluoropropylene (HFP), tetrafluoroethylene (TFE), trifluorochloroethylene, ethylene, and propylene. These may be used singly or in combination of two or more kinds. In particular, hexafluoropropylene (HFP), tetrafluoroethylene (TFE), trifluorochloroethylene, and the like are preferred.

The second polymer, to sum up, can be seen as a polymer that contains vinylidene fluoride and a monomer unit derived from vinylidene fluoride, as major components, in a range not overlapping with those in the first polymer.

A ratio (M1/M2 ratio) of a mass M1 of the first polymer to a mass M2 of the second polymer contained in the binder is, for example, 20/80 to 60/40, and may be 40/60 to 60/40. In this case, the H(α)/H(β) ratio can be easily controlled to satisfy 0.2 ≤ H(α)/H(β)≤ 5, and can also be easily controlled to satisfy 0.2 ≤ H(α)/H(β) ≤ 3, or 0.2 ≤ H(α)/H(β) ≤ 2.

The M1/M2 ratio can be estimated by peeling off the positive electrode mixture from the positive electrode, and after roughly separating the binder from the positive electrode active material, performing 19F-MAS-NMR analysis on the binder, to calculate the ratio of VDF to TrFE from the spectrum. Alternatively, a plurality of compatibilized resins of PVDF and a PVDF-TrFE copolymer with varying ratios of VDF to TrFE may be prepared. In this case, films are formed using the compatibilized resins, and calibration curves related to viscoelastic behavior are created, from which the mixing ratio can be estimated. The separation of the binder from the positive electrode active material is possible by, while heating the positive electrode mixture in a solvent, such as NMP, diluting and dissolving the binder, followed by centrifugation.

The number average molecular weight of the first polymer may be, for example, 100,000 to 500,000. The number average molecular weight of the second polymer may be, for example, 300,000 to 2,000,000. Here, the number average molecular weight is a polystyrene-equivalent value determined by gel permeation chromatography (GPC).

The positive electrode mixture may contain a binder other than the binder having a PVDF structure, as long as the aforementioned effects are not significantly impaired. The proportion of the binder having a PVDF structure in the whole binder is preferably 80 mass% or more, and all of the binder may be the binder having a PVDF structure. Specific examples of the binder other than the binder having a PVDF structure include polytetrafluoroethylene (PTFE), polyethylene, polypropylene, polyacrylic acid, polymethyl acrylate, and ethylene-acrylic acid copolymer. These may be used singly or in combination of two or more kinds.

The content ratio of the binder having a PVDF structure in the positive electrode mixture is, for example, 0.5 parts by mass or more and 2 parts by mass or less, and may be 0.5 parts by mass or more and 1.5 parts by mass or less, per 100 parts by mass of the positive electrode active material. In this case, while increasing the positive electrode capacity, the binding capability of the positive electrode mixture and the adhesion between the positive electrode mixture layer and the positive electrode current collector sheet can be easily improved.

The positive electrode active material includes, for example, a composite oxide having a layered rock-salt type crystal structure, and containing lithium and an element A other than lithium. In order to achieve high capacity, it is desirable that the element A contains at least nickel. The atomic ratio Ni/A of the nickel to the element A may be, for example, 0.8 or more and 1.0 or less. In a composite oxide containing Ni at such a high concentration, a high resistance component tends to be formed on its surface. On the other hand, when the binder contains a β-type crystal and 0.2 ≤ H(α)/H(β) ≤ 5 is satisfied, the ionization of the salt in the nonaqueous electrolyte is facilitated in the vicinity of the positive electrode active material, to lower the activation energy of the Faradaic reaction, and this suppresses the increase in internal resistance of the positive electrode. In other words, the influence of the high resistance component can be reduced.

In the following, the composite oxide having a layered rock-salt type crystal structure, containing lithium and an element A, and having an atomic ratio Ni/A of the nickel to the element A of 0.8 to 1.0 is sometimes referred to as a "composite oxide HN". The proportion of the composite oxide HN in the whole positive electrode active material is, for example, 80 mass% or more, and all of the positive electrode active material may be the composite oxide HN. The positive electrode active material may contain a small amount of a composite oxide (e.g., LiCoO₂, Li₂NiO₂, Li₅FeO₄, etc.) other than the composite oxide HN.

The element A includes at least Ni, and may further include at least one selected from the group consisting of cobalt (Co), manganese (Mn), aluminum (Al), magnesium (Mg), calcium (Ca), iron (Fe), copper (Cu), zinc (Zn), chromium (Cr), titanium (Ti), niobium (Nb), zirconium (Zr), vanadium (V), tantalum (Ta), molybdenum (Mo), tungsten (W), strontium (Sr), silicon (Si), and boron (B).

In particular, the element A preferably includes Ni, and at least one selected from the group consisting of Co, Mn, and Al, and more preferably includes Ni, Co, and at least one of Mn and Al. When the element A includes Co, the phase transition of the composite oxide containing Li and Ni is suppressed during charging and discharging, and the stability of the crystal structure is improved, likely leading to improved capacity retention rate. When the element A contains at least one of Mn and Al, the thermal stability is improved.

The composite oxide HN is preferably an oxide represented by a general formula: LiₐNiₓCo_{y}M_{1-x-y}O₂. In the formula, it is preferable that 0.97 ≤ a ≤ 1.2, 0.8 ≤ x ≤ 1.0, and 0 ≤ y ≤ 0.2, and M is at least one selected from the group consisting of Mn, Al, B, W, Sr, Mg, Mo, Nb, Ti, Si, and Zr.

When "a" representing the composition ratio of Li, is 0.97 or more and 1.2 or less, cation mixing which is a phenomenon of Ni ions entering the Li site is unlikely to occur, and the output characteristics is likely to be improved. When "x" representing the composition ratio of Ni is 0.8 or more and 1 or less, the proportion of Ni in the element A is large, likely leading to high capacity. The symbol "y" may be greater than 0 and less than 0.2. When the composite oxide HN contains Co, the stability of the crystal structure is likely to be improved, and the capacity retention rate is likely to be improved. It may be that the element M is Al, and 0 < y ≤ 0.2 and 0 < (1-x-y) ≤ 0.05. When the composite oxide HN contains Al, the thermal stability of the composite oxide is likely to be improved. Note that the value of "a" changes during charging and discharging.

The density of the positive electrode mixture layer may be 3.45 g/cm³ or more and 3.75 g/cm³ or less, and may be 3.5 g/cm³ or more and 3.75 g/cm³ or less. When the density of the positive electrode mixture layer is 3.45 g/cm³ or more, the contact points of the composite oxide with the conductive agent and the binder increase. In addition, the contact points between the composite oxide particles are likely to be formed sufficiently. As a result, electron conduction paths are sufficiently formed, making it easy to achieve high capacity, and improve the capacity retention rate. In addition, the adhesion between the positive electrode mixture layer and the positive electrode current collector sheet is also improved.

Particles of the composite oxide usually include secondary particles each formed of a plurality of primary particles aggregated together. The average particle diameter (D50) of the secondary batteries is, for example, 5 µm or more and 20 µm or less. Here, the average particle diameter (D50) means a median diameter at which the cumulative volume value reaches 50% in the volume-based particle size distribution. The average particle diameter (D50) of the secondary particles can be determined by particle size distribution measurement by a laser diffraction method.

The positive electrode mixture may contain a conductive agent. By the conductive agent, the conductive paths between the positive electrode active material particles and between the positive electrode active material and the positive electrode current collector sheet are sufficiently formed. The conductive agent preferably includes carbon nanotubes (CNTs). CNTs are easily entangled with the binder, so that the contact points between the CNTs and the positive electrode active material are firmly maintained by the binder during charging and discharging.

The average length of the CNTs is preferably 0.5 µm or more, more preferably 0.5 µm or more and 10.0 µm or less, further more preferably 0.5 µm or more and 5.0 µm or less. In this case, the CNTs are likely to be present between the particles of the positive electrode active material, and by the CNTs, electron conduction paths between the particles of the positive electrode active material are likely to be formed sufficiently.

In view of improving the capacity retention rate, the average diameter of the CNTs may be 0.5 nm or more and 30 nm or less, and may be 0.5 nm or more and 20 nm or less. When the average diameter of the CNTs is 0.5 nm or more, the strength of the CNTs is sufficiently ensured, and the electron conduction paths are likely to be maintained by the CNTs during charging and discharging. In addition, the CNTs are likely to be present between the particles of the positive electrode active material.

The average length and the average diameter of the CNTs can be determined by obtaining a cross section of the positive electrode mixture layer or an image of CNTs with a scanning electron microscope (SEM) or a transmission electron microscope (TEM), and randomly selecting a plurality of (e.g., about 50 to 200) CNTs using the image, to measure the lengths and diameters thereof, and average the results. The length of the CNTs refers to the length when straightened.

The conductive agent may contain a conductive material other than CNTs. Examples of the conductive material other than CNTs include: graphite, such as natural graphite and artificial graphite; carbon black, such as acetylene black; graphene sheets; metal fibers; and metal powder, such as aluminum. The conductive agent may be used singly or in combination of two or more kinds.

The content of the conductive agent in the positive electrode mixture layer is preferably, for example, 0.01 parts by mass or more and 1.0 parts by mass or less, per 100 parts by mass of the positive electrode active material, in view of achieving high capacity. In this case, all of the conductive agent may be CNTs.

The positive electrode current collector sheet may be, for example, a non-porous conductive substrate (metal foil, etc.), or a porous conductive substrate (mesh, net, punched sheet, etc.). Examples of the material of the positive electrode current collector sheet include stainless steel, aluminum, aluminum alloy, and titanium. The thickness of the positive electrode current collector sheet is, for example, 3 to 50 µm.

A method for producing a positive electrode includes, for example, a step of preparing a positive electrode slurry by dispersing a positive electrode mixture which contains a positive electrode active material and a binder having a PVDF structure as essential components and a conductive agent as an optional component, in a dispersion medium, and a step of applying the positive electrode slurry onto a surface of the positive electrode current collector sheet, followed by drying, to form a positive electrode mixture layer. The applied film after drying may be rolled as necessary. The positive electrode mixture layer may be formed on a surface on one side or both sides of the positive electrode current collector sheet. Examples of the dispersion medium include water, alcohols, such as ethanol, and N-methyl-2-pyrrolidone (NMP).

### [Negative electrode]

The negative electrode may include, for example, a negative electrode current collector sheet, and a negative electrode mixture layer supported on the negative electrode current collector sheet. The negative electrode can be obtained by, for example, applying a negative electrode slurry of a negative electrode mixture dispersed in a dispersion medium onto a surface of the negative electrode current collector sheet, followed by drying, to form a negative electrode mixture layer. The applied film after drying may be rolled as necessary. The negative electrode mixture layer may be formed on a surface on one side or both sides of the negative electrode current collector sheet.

The negative electrode mixture includes a negative electrode active material as an essential component, and may include a binder, a conductive agent, a thickener, and the like as optional components. As the binder, a fluorocarbon resin, an acrylic resin, a rubbery material, and the like can be used. Examples of the fluorocarbon resin include tetrafluoroethylene (PTFE), polyvinylidene fluoride (PVDF), modified PVDF, tetrafluoroethylene-perfluoroalkyl vinyl ether copolymer (PFA), and tetrafluoroethylenehexafluoropropylene copolymer (FEP). Examples of the acrylic resin include polyacrylic acid and acrylic acid-methacrylic acid copolymer. Examples of the rubbery material include styrene butadiene rubber. As the dispersion medium, it is desirable to use water. As the conductive agent, those exemplified for the positive electrode can be used, except for graphite. As the thickener, for example, carboxymethyl cellulose (CMC), a salt of CMC, and the like can be used.

As the negative electrode active material, a carbon material can be used. Examples of the carbon material include graphite, graphitizable carbon (soft carbon), and non-graphitizable carbon (hard carbon). In particular, graphite is preferred in terms of its excellent stability during charging and discharging and small irreversible capacity. Graphite means a material having a graphite-like crystal structure, examples of which include natural graphite, artificial graphite, and graphitized mesophase carbon particles. The carbon material may be used singly or in combination of two or more kinds.

In view of achieving high capacity, the negative electrode active material preferably includes a silicon-containing material. Examples of the silicon-containing material include a material including a lithium ion conductive phase and silicon phases dispersed in the lithium ion conductive phase. Examples of the lithium ion conductive phase include a silicate phase (e.g., Li₂ᵤSiOᵤ₊₂ where 0 < u < 2)) containing at least one of an alkali metal element and a Group 2 element, a SiO₂ phase, and an amorphous carbon phase. The silicon-containing material including a SiO₂ phase and silicon phases dispersed therein can, as a whole, have a composition of, for example, SiOₓ where 0.5 < x < 1.5.

By using a carbon material and a silicon-containing material in combination, favorable cycle characteristics and high capacity can be obtained in a well-balanced manner. The proportion of the silicon-containing material in the total of the carbon material and the silicon-containing material is, for example, 0.5 mass% or more, more preferably 1 mass% or more, further more preferably 2 mass% or more. In view of improving the cycle characteristics, the proportion of the silicon-containing material in the total of the silicon-containing material and the carbon material is, for example, 30 mass% or less, more preferably 20 mass% or less, further more preferably 15 mass% or less.

The negative electrode current collector sheet may be in the same form as the positive electrode current collector sheet (e.g., metal foil), and may be a sheet constituted of a material, such as stainless steel, nickel, nickel alloy, copper, and copper alloy. The thickness of the negative electrode current collector sheet is, for example, 1 to 50 µm.

### [Nonaqueous electrolyte]

The nonaqueous electrolyte may be a liquid electrolyte (electrolyte solution), may be a gel electrolyte, and may be a solid electrolyte. The gel electrolyte includes a lithium salt and a matrix polymer, or includes a lithium salt, a nonaqueous solvent, and a matrix polymer. The matrix polymer may be, for example, a polymer material that absorbs a nonaqueous solvent and turns into a gel. Examples of the polymer material include fluorocarbon resins, acrylic resins, polyether resins, and polyethylene oxides. The solid electrolyte may be an inorganic solid electrolyte. As the inorganic solid electrolyte, for example, a known material for use in all-solid lithium-ion secondary batteries and the like (e.g., oxide-based solid electrolyte, sulfide-based solid electrolyte, halide-based solid electrolyte) can be used. The liquid electrolyte (electrolyte solution) contains, for example, a nonaqueous solvent, and a lithium salt dissolved in the nonaqueous solvent.

As the nonaqueous solvent, for example, a cyclic carbonic acid ester, a chain carbonic acid ester, a cyclic carboxylic acid ester, a chain carboxylic acid ester, and the like are used. Examples of the cyclic carbonic acid ester include propylene carbonate (PC), and ethylene carbonate (EC). A cyclic carbonate ester having an unsaturated bond, such as vinylene carbonate (VC), may also be used. A cyclic carbonate ester having fluorine atom, such as fluoroethylene carbonate (FEC), may be used. Examples of the chain carbonic acid ester include diethyl carbonate (DEC), ethyl methyl carbonate (EMC), and dimethyl carbonate (DMC). Examples of the cyclic carboxylic acid ester include γ-butyrolactone (GBL), and γ-valerolactone (GVL). Examples of the chain carboxylic acid ester include methyl formate, ethyl formate, propyl formate, methyl acetate, ethyl acetate, propyl acetate, methyl propionate, ethyl propionate, and propyl propionate. The nonaqueous solvent may be used singly or in combination of two or more kinds.

As the lithium salt, LiClO₄, LiBF₄, LiPF₆, LiAlCl₄, LiSbF₆, LiSCN, LiCF₃SO₃, LiCF₃CO₂, LiAsF₆, LiB₁₀Cl₁₀, lithium lower aliphatic carboxylate, LiCl, LiBr, LiI, borates, and imides. Examples of the borates include lithium bisoxalateborate and lithium difluorooxalateborate. Examples of the imides include lithium bisfluorosulfonylimide (LiN(FSO₂)₂), lithium bistrifluoromethanesulfonate imide (LiN(CF₃SO₂)₂), lithium trifluoromethanesulfonate nonafluorobutanesulfonate imide (LiN(CF₃SO₂)(C₄F₉SO₂)), and lithium bispentafluoroethanesulfonate imide (LiN(C₂F₅SO₂)₂). The lithium salt may be used singly or in combination of two or more kinds. The concentration of the lithium salt in the nonaqueous electrolyte is, for example, 0.5 mol/L or more and 2 mol/L or less.

### [Separator]

Usually, it is desirable to interpose a separator between the positive electrode and the negative electrode. The separator has ion permeability and has electrically insulating properties. As the separator, a microporous thin film, a woven fabric, a nonwoven fabric, and the like can be used. A preferred material of the separator is a polyolefin, such as polypropylene and polyethylene.

### <Nonaqueous electrolyte secondary battery>

One example of the structure of the nonaqueous electrolyte secondary battery is a structure in which an electrode group formed by winding the positive electrode and the negative electrode with the separator interposed therebetween is housed in an outer body, together with the nonaqueous electrolyte. Without limited thereto, another form of electrode group may be adopted. For example, a stacked electrode group in which the positive electrode and the negative electrode are stacked together, with a separator interposed therebetween may be adopted. The form of the secondary battery is also not limited, and may be, for example, cylindrical type, prismatic type, coin type, button type, and laminate type.

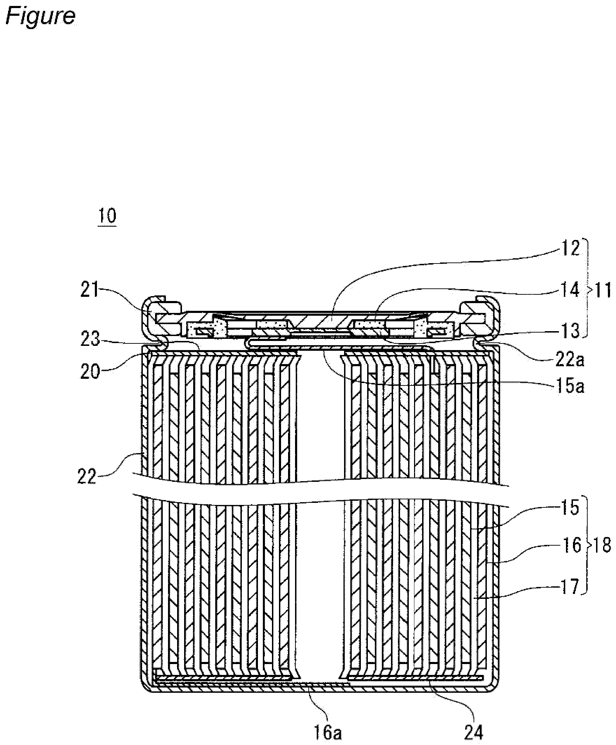

Description will be given below of the structure of the nonaqueous electrolyte secondary battery, with reference to FIG. 1. FIG. 1 is a longitudinal sectional view of a cylindrical secondary battery which is an example of the present embodiment. The present disclosure, however, is not limited to the following configuration.

The nonaqueous electrolyte secondary battery (hereinafter, battery 10) includes an electrode group 18, a nonaqueous electrolyte (not shown), and a bottomed cylindrical battery can 22 housing them. A sealing body 11 is fixed by crimping onto the opening of the battery can 22, with a gasket 21 interposed therebetween. This seals the inside of the battery 10. The sealing body 11 includes a valve body 12, a metal plate 13, and an annular insulating member 14 interposed between the valve body 12 and the metal plate 13. The valve body 12 and the metal plate 13 are connected to each other at their respective centers. A positive electrode lead 15a drawn out from the positive electrode 15 is connected to the metal plate 13. Thus, the valve body 12 functions as an external terminal of the positive electrode. A negative electrode lead 16a drawn out from the negative electrode 16 is connected to the inner surface of the bottom of the battery can 22. An annular groove 22a is formed near the opening end of the battery can 22. A first insulating plate 23 is disposed between one end face of the electrode group 18 and the annular groove 22a. A second insulating plate 24 is disposed between the other end face of the electrode group 18 and the bottom of the battery can 22. The electrode group 18 is formed by winding the positive electrode 15 and the negative electrode 16, with the separator 17 interposed therebetween.

### (Supplementary notes)

The above description discloses the following techniques.

### (Technique 1)

A positive electrode for a nonaqueous electrolyte secondary battery, comprising:
a positive electrode mixture containing a positive electrode active material, and a binder having a polymer structure derived from vinylidene fluoride, wherein
an ATR-IR spectrum of the positive electrode mixture has
an α peak belonging to an α-type crystal in the polymer structure in a wavelength region of 760 to 764 cm⁻¹, and a β peak belonging to a β-type crystal in the polymer structure in a wavelength region of 838 to 842 cm⁻¹, and
a maximum absorption intensity H(α) of the α peak and a maximum absorption intensity H(β) of the β peak satisfy 0.2 ≤ H(α)/H(β) ≤ 5.

### (Technique 2)

The positive electrode for a nonaqueous electrolyte secondary battery according to technique 1, wherein
the binder contains a first polymer and a second polymer,
the first polymer has a copolymer structure of a vinylidene fluoride unit and a trifluoroethylene unit, and
the second polymer includes at least one selected from the group consisting of a polyvinylidene fluoride, a modified polyvinylidene fluoride, and a vinylidene fluoride-based copolymer.

### (Technique 3)

The positive electrode for a nonaqueous electrolyte secondary battery according to technique 1 or 2, wherein
a ratio M1/M2 between
a mass M1 of the first polymer and
a mass M2 of the second polymer contained in the binder is
20/80 to 60/40.

### (Technique 4)

The positive electrode for a nonaqueous electrolyte secondary battery according to any one of techniques 1 to 3, wherein
a ratio mVDF/mTrFE between
the number of moles mVDF of the vinylidene fluoride unit and
the number of moles mTrFE of the trifluoroethylene unit contained in the first polymer is
50/50 to 90/10.

### (Technique 5)

The positive electrode for a nonaqueous electrolyte secondary battery according to any one of techniques 1 to 4, wherein
the positive electrode active material has a layered rock-salt type crystal structure, and contains a composite oxide containing lithium and an element A other than lithium,
the element A contains at least nickel, and
an atomic ratio Ni/A of the nickel to the element A is 0.8 or more and 1.0 or less.

### (Technique 6)

The positive electrode for a nonaqueous electrolyte secondary battery according to any one of techniques 1 to 5, wherein
the composite oxide is represented by a general formula: LiₐNiₓCo_{y}M_{1-x-y}O₂,
where 0.97 ≤ a ≤ 1.2, 0.8 ≤ x ≤ 1.0, and 0 ≤ y ≤ 0.2, and M is at least one selected from the group consisting of Mn, Al, B, W, Sr, Mg, Mo, Nb, Ti, Si, and Zr.

### (Technique 7)

A nonaqueous electrolyte secondary battery, comprising the positive electrode for a nonaqueous electrolyte secondary battery according to any one of techniques 1 to 6, a negative electrode, and a nonaqueous electrolyte.

### [Examples]

The present invention will be more specifically described below with reference to Examples. The present invention, however, is not limited to the following Examples.

### <<Comparative Example 1>>

### (Preparation of composite oxide HN)

Ni_{0.8}Co_{0.17}Al_{0.03}(OH)₂ and Li₂CO₃ obtained by coprecipitation were mixed so that the atomic ratio Li/(Ni+Co+Al) of Li to the total of Ni, Co, and Al was 1.05/1. The mixture was fired in an oxygen atmosphere, to obtain a composite oxide. The composition of the obtained composite oxide was Li_{1.05}Ni_{0.8}Co_{0.17}Al_{0.03}O₂ (Ni/A = 0.8). The composition of the composite oxide was determined by ICP emission spectrometry. This was followed by crushing and classification using a sieve, to obtain powder of a composite oxide HN with an average particle diameter of 12 µm.

### (Production of positive electrode)

To 100 parts by mass of the composite oxide HN which was a positive electrode active material (PAM), 1 part by mass of a binder having a PVDF polymer structure, 1 part by mass of a conductive agent, and an appropriate amount of N-methyl-2-pyrrolidone (NMP) were added, and then stirred, to prepare a positive electrode slurry. As the binder, polyvinylidene fluoride (PVDF) which was a second polymer was used alone (M1/M2 = 0/100). As the conductive agent, CNTs (average length 1 µm, average diameter 10 nm) were used.

The positive electrode slurry was applied onto a surface of an aluminum foil (positive electrode current collector sheet). The applied film was dried, and then rolled, to form a positive electrode mixture layer (density 3.6 g/cm³) on each of both sides of the aluminum foil. In this way, a positive electrode was obtained. At this time, the applied amount of the positive electrode slurry was adjusted so that the amount of the positive electrode mixture layer supported on the positive electrode current collector sheet was 280 g per 1 m².

### (Production of negative electrode)

To 100 parts by mass of a negative electrode active material, 1 part by mass of styrene-butadiene rubber (SBR), 1 part by mass of sodium carboxymethylcellulose (CMC-Na), and an appropriate amount of water were added, and then stirred, to prepare a negative electrode slurry.

The negative electrode active material used here was a mixture of a silicon-containing material and graphite (average particle diameter (D50) 25 µm). In the negative electrode active material, the mass ratio of the silicon-containing material to the graphite was set to 10:90. The silicon-containing material used here was SiOₓ particles (x = 1, average particle diameter (D50) 5 µm) whose surfaces were coated with a conductive layer containing conductive carbon. The coating amount of the conductive layer was set to 5 parts by mass per 100 parts by mass of the total of the SiOₓ particles and the conductive layer.

The negative electrode slurry was applied onto a surface of a copper foil (negative electrode current collector sheet). The applied film was dried, and then rolled, to form a negative electrode mixture layer (thickness 200 µm, density 1.5 g/cm³) on each of both sides of the copper foil. In this way, a negative electrode was obtained.

### (Preparation of nonaqueous electrolyte)

LiPF₆ was dissolved at a concentration of 1.0 mol/L in a mixed solvent of ethylene carbonate (EC) and diethyl carbonate (DEC) (volume ratio 3:7), to obtain a nonaqueous electrolyte.

### (Fabrication of nonaqueous electrolyte secondary battery)

To the obtained positive electrode, one end of a positive electrode lead made of aluminum was attached. To the obtained negative electrode, a negative electrode lead made of nickel was attached. The positive electrode and the negative electrode were wound, with a separator made of polyethylene interposed therebetween, to form a wound electrode group. The electrode group was vacuum-dried at 105 °C for 2 hours, and then housed in a bottomed cylindrical battery case serving as a negative electrode terminal. The battery case used here was an iron case (outer diameter 18 mm, height 65 mm). The other end of the positive electrode lead was connected to a sealing body, and the other end of the negative electrode lead was connected to the inner bottom surface of the battery case. After injecting the nonaqueous electrolyte into the battery case, the opening of the battery case was closed using a metal sealing body serving as a positive electrode terminal. At this time, a gasket made of resin was interposed between the sealing body and the opening end of the battery case. In this way, a 18650-type cylindrical nonaqueous electrolyte secondary battery (battery C1) was fabricated.

### <<Example 1>>

In producing a positive electrode, as the binder having a PVDF polymer structure, 0.8 parts by mass of PVDF, which was the second polymer, and 0.2 parts by mass of a copolymer (P(VDF-TrFE)), which was the first polymer, of 75:25 molar ratio of vinylidene fluoride (VDF) and trifluoroethylene (TrFE) were used. That is, M1/M2 = 20/80, and mVDF/mTrFE in the first polymer = 75/25. Except for the above, in the same manner as in Comparative Example 1, a battery A1 was fabricated.

### <<Example 2>>

In producing a positive electrode, as the binder having a PVDF polymer structure, 0.6 parts by mass of PVDF, which was the second polymer, and 0.4 parts by mass of a copolymer (P(VDF-TrFE)), which was the first polymer, of 75:25 molar ratio of vinylidene fluoride (VDF) and trifluoroethylene (TrFE) were used. That is, M1/M2 = 40/60, and mVDF/mTrFE in the first polymer = 75/25. Except for the above, in the same manner as in Comparative Example 1, a battery A2 was fabricated.

### <<Example 3>>

In producing a positive electrode, as the binder having a PVDF polymer structure, 0.4 parts by mass of PVDF, which was the second polymer, and 0.6 parts by mass of a copolymer (P(VDF-TrFE)), which was the first polymer, of 75:25 molar ratio of vinylidene fluoride (VDF) and trifluoroethylene (TrFE) were used. That is, M1/M2 = 60/40, and mVDF/mTrFE in the first polymer = 75/25. Except for the above, in the same manner as in Comparative Example 1, a battery A3 was fabricated.

### <<Comparative Example 2>>

In producing a positive electrode, as the binder having a PVDF polymer structure, 0.2 parts by mass of PVDF, which was the second polymer, and 0.8 parts by mass of a copolymer (P(VDF-TrFE)), which was the first polymer, of 75:25 molar ratio vinylidene fluoride (VDF) and trifluoroethylene (TrFE) were used. That is, M1/M2 = 80/20, and mVDF/mTrFE in the first polymer = 75/25. Except for the above, in the same manner as in Comparative Example 1, a battery C2 was fabricated.

### <<Comparative Example 3>>

In producing a positive electrode, as the binder having a PVDF polymer structure, 1.0 part by mass of a copolymer (P(VDF-TrFE)), which was the first polymer, of 75:25 molar ratio of vinylidene fluoride (VDF) and trifluoroethylene (TrFE) was used alone. That is, M1/M2 = 100/0, and mVDF/mTrFE in the first polymer = 75/25. Except for the above, in the same manner as in Comparative Example 1, a battery C3 was fabricated.

### <<Comparative Example 4>>

In producing a positive electrode, as the binder having a PVDF polymer structure, 0.8 parts by mass of PVDF, which was the second polymer, and 0.2 parts by mass of a copolymer (P(VDF-TrFE)), which was the first polymer, of 30:70 molar ratio of vinylidene fluoride (VDF) and trifluoroethylene (TrFE) were used. That is, M1/M2 = 20/80, and mVDF/mTrFE in the first polymer = 30/70. Except for the above, in the same manner as in Comparative Example 1, a battery C4 was fabricated.

### <<Comparative Example 5>>

In producing a positive electrode, 0.8 parts by mass of PVDF, which was the second polymer, was used as the binder having a PVDF polymer structure, and furthermore, to the positive electrode mixture, 0.2 parts by mass of BaTiO₃ powder (average particle diameter 80 nm) was added. Except for the above, in the same manner as in Comparative Example 1, a battery C5 was fabricated. The BaTiO₃ powder was mixed with the positive electrode active material and stirred at 2700 rpm for 3 minutes, followed by sintering at 500 °C for 4 hours, and thus supported on the surface of the positive electrode active material.

### <<Comparative Example 6>>

In producing a positive electrode, 1.2 parts by mass of PVDF, which was the second polymer, was used as the binder having a PVDF polymer structure, and furthermore, to the negative electrode mixture, 0.3 parts by mass of BaTiO₃ powder (average particle diameter 80 nm) was added. Except for the above, in the same manner as in Comparative Example 1, a battery C6 was fabricated. The BaTiO₃ powder was supported on the surface of the positive electrode active material in the same manner as in Comparative Example 5.

The following evaluations were performed on the batteries A1 to A3 and C1 to C6. The results are shown in Table 1.

### [Evaluation 1: ATR-IR]

The completed battery was subjected to preliminary charging and discharging consisting of charging to 4.2 V at a constant current equivalent to 0.3C, followed by discharging to 2.5 V at a constant current equivalent to 0.3C, thereby obtaining a battery in a discharged state (SOC = 10% or less) equivalent to the initial state. Here, 1C is the current value at which the amount of electricity corresponding to the rated capacity flows in one hour when the battery is charged or discharged at a constant current.

The battery in the initial state was disassembled, to take out the positive electrode. The positive electrode was washed with DMC, followed by vacuum drying, and peeling off the positive electrode mixture layer only, to obtain a sample of the positive electrode mixture. The obtained sample was analyzed by ATR-IR. The maximum absorption intensities H(α) and H(β) respectively of an α peak belonging to the α crystal in the PVDF polymer structure observed in the wavelength region of 760 to 764 cm⁻¹ and a β peak belonging to the β crystal in the PVDF polymer structure observed in the wavelength region of 838 to 842 cm⁻¹ were measured, to calculate a H(α)/H(β) ratio. Each maximum absorption intensity H is the height of the peak from the baseline.

### [Evaluation 2: Peeling strength between positive electrode mixture layer and positive electrode current collector sheet]

The battery in the initial state was disassembled, to take out the positive electrode. The positive electrode was washed with DMC, followed by vacuum drying. Thereafter, the peeling strength of the positive electrode mixture layer from the positive electrode current collector sheet (aluminum foil) was measured using a measuring apparatus conforming to JIS Z0237 (2009). Specifically, the positive electrode was formed into a belt-shaped sample having a width of 10 mm and a length of 50 mm or more. One side of a double-sided tape (e.g., No. 5606 available from Nitto Denko Corporation) having a width of 20 mm and a length of 130 mm was attached to the positive electrode mixture layer of the sample, and the other side of the double-sided tape was attached to the horizontal table having a flat surface. The positive electrode current collector sheet, with its one end in the length direction was fixed with the force gauge, was pulled vertically at a speed of 50 mm/min, to peel off the positive electrode mixture layer attached to the double-sided tape from the positive electrode current collector sheet. The tension at that time was measured for 15 seconds or more, to calculate an average tension in the continuous 15-second section. If the average tension was 5.0 N/mm or more, the peel strength was evaluated as OK, and if it was less than that, it was evaluated as NG.

### [Evaluation 3: Initial capacity]

The battery in the initial state was constant-current charged at a current of 0.5C until the voltage reached 4.2 V, and then, constant-voltage charged at a voltage of 4.2 V until the current reached 0.05C. Thereafter, a constant-current discharging was performed at a current of 0.1C until the voltage reached 2.5 V, and the discharge capacity at this time was determined as an initial capacity. The rest time between charging and discharging was set to 10 minutes. The charging and discharging were performed in a 25 °C environment. The initial capacity was expressed as a relative value, with the initial capacity of the battery C1 of Comparative Example 1 taken as 100.

### [Evaluation 4: Capacity retention rate]

A charge-discharge cycle test was performed under the following charge and discharge conditions. The rest time between charging and discharging was set to 10 minutes. The charging and discharging were performed in a 25 °C environment.

### <Charging>

A constant-current charging was performed at a current of 0.5C until the voltage reached 4.2 V, and then, a constant-voltage charging was performed at a voltage of 4.2 V until the current reached 0.05C.

### <Discharging>

A constant-current discharging was performed at a current of 0.5C until the voltage reached 2.5 V.

Charging and discharging were repeated under the above conditions. The ratio (percentage) of the discharge capacity at the 100th cycle to the discharge capacity at the 1st cycle was calculated as a capacity retention rate (%). The capacity retention rate was expressed as a relative value, with the capacity retention rate of the battery C1 of Comparative Example 1 taken as 100.

**[Table 1]**

| battery | binder + ferroelectric (pts. mass vs PAM100) | binder | H(α)/H(β) | peeling strength | initial capacity | capacity retention rate |
|---|---|---|---|---|---|---|
| C1 | 1 | P(VDF/TrFE(75/25))/PVDF = 0/100 | 5.61 | OK | 100 | 100 |
| E1 | 1 | P(VDF/TrFE(75/25))/PVDF = 20/80 | 4.5 | OK | 100 | 100.5 |
| E2 | 1 | P(VDF/TrFE(75/25))/PVDF = 40/60 | 1.75 | OK | 100 | 103.1 |
| E3 | 1 | P(VDF/TrFE(75/25))/PVDF = 60/40 | 0.27 | OK | 100 | 102.7 |
| C2 | 1 | P(VDF/TrFE(75/25))/PVDF = 80/20 | 0.05 | OK | 100 | 98.5 |
| C3 | 1 | P(VDF/TrFE(75/25))/PVDF = 100/0 | 0 | OK | 100 | 94.1 |
| C4 | 1 | P(VDF/TrFE(30/70))/PVDF = 20/80 | >50 | OK | 100 | 90.9 |
| C5 | 1 | PVDF/TiBaO₃ = 80/20 | >50 | NG | - | - |
| C6 | 1.5 | PVDF/TiBaO₃ = 80/20 | >50 | OK | 98 | 104.1 |

In the batteries A1 to A3 satisfying 0.2 ≤ H(α)/H(β) ≤ 5, the capacity retention rate was improved while a high capacity equivalent to that of the battery B1 was maintained. On the other hand, in the batteries B2 to B5 not satisfying 0.2 ≤ H(α)/H(β) ≤ 5, the capacity retention rate was low. In the battery B6, the capacity retention rate was improved, but the initial capacity decreased significantly.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

### [Industrial Applicability]

The positive electrode for a nonaqueous electrolyte secondary battery according to the present disclosure can be suitably used, for example, in a nonaqueous electrolyte secondary battery for which high capacity and high capacity retention rate (cycle characteristics) are required.

### [Reference Signs List]

10: secondary battery, 11: sealing body, 12: valve body, 13: metal plate, 14: insulating member, 15: positive electrode, 15a: positive electrode lead, 16: negative electrode, 16a: negative electrode lead, 17: separator, 18: electrode group, 21: gasket, 22: battery can, 22a: groove, 23: first insulating plate, 24: second insulating plate, 16: negative electrode

## Claims

1. A positive electrode for a nonaqueous electrolyte secondary battery, comprising:
a positive electrode mixture containing a positive electrode active material, and a binder having a polymer structure derived from vinylidene fluoride, wherein
an ATR-IR spectrum of the positive electrode mixture has
an α peak belonging to an α-type crystal in the polymer structure in a wavelength region of 760 to 764 cm⁻¹, and a β peak belonging to a β-type crystal in the polymer structure in a wavelength region of 838 to 842 cm⁻¹, and
a maximum absorption intensity H(α) of the α peak and a maximum absorption intensity H(β) of the β peak satisfy 0.2 ≤ H(α)/H(β) ≤ 5.

2. The positive electrode for a nonaqueous electrolyte secondary battery according to claim 1, wherein
the binder contains a first polymer and a second polymer,
the first polymer has a copolymer structure of a vinylidene fluoride unit and a trifluoroethylene unit, and
the second polymer includes at least one selected from the group consisting of a polyvinylidene fluoride, a modified polyvinylidene fluoride, and a vinylidene fluoride-based copolymer.

3. The positive electrode for a nonaqueous electrolyte secondary battery according to claim 1, wherein
a ratio M1/M2 between
a mass M1 of the first polymer and
a mass M2 of the second polymer contained in the binder is
20/80 to 60/40.

4. The positive electrode for a nonaqueous electrolyte secondary battery according to claim 1, wherein
a ratio mVDF/mTrFE between
the number of moles mVDF of the vinylidene fluoride unit and
the number of moles mTrFE of the trifluoroethylene unit contained in the first polymer is
50/50 to 90/10.

5. The positive electrode for a nonaqueous electrolyte secondary battery according to claim 1, wherein
the positive electrode active material has a layered rock-salt type crystal structure, and contains a composite oxide containing lithium and an element A other than lithium,
the element A contains at least nickel, and
an atomic ratio Ni/A of the nickel to the element A is 0.8 or more and 1.0 or less.

6. The positive electrode for a nonaqueous electrolyte secondary battery according to claim 1, wherein
the composite oxide is represented by a general formula: LiₐNiₓCo_{y}M_{1-x-y}O₂, where 0.97 ≤ a ≤ 1.2, 0.8 ≤ x ≤ 1.0, and 0 ≤ y ≤ 0.2, and M is at least one selected from the group consisting of Mn, Al, B, W, Sr, Mg, Mo, Nb, Ti, Si, and Zr.

7. A nonaqueous electrolyte secondary battery, comprising the positive electrode for a nonaqueous electrolyte secondary battery according to claim 1, a negative electrode, and a nonaqueous electrolyte.
